Europäisches Patentamt

European Patent Office

Office européen des brevets

(19)

(11) Publication number: **0 006 683**
**B1**

(12) **EUROPEAN PATENT SPECIFICATION**

(45) Date of publication of patent specification: 30.12.81

(21) Application number: 79300871.5

(22) Date of filing: 18.05.79

(51) Int. Cl.³: **F 24 D 3/00, F 24 D 19/00, F 28 D 21/00**

(54) **Modules for underfloor heating and/or cooling systems and system comprising such modules.**

(30) Priority: 19.05.78 GB 20751/78

(43) Date of publication of application:
09.01.80 Bulletin 80/1

(45) Publication of the grant of the European patent:
30.12.81 Bulletin 81/52

(84) Designated Contracting States:
AT BE CH DE FR GB IT NL SE

(56) References cited:
DE - A - 2 364 013
DE - A - 2 702 337
FR - A - 2 137 335
GB - A - 536 390

HEATING/PIPING/AIRCONDITIONING, vol. 46,
September 1974
Stamford
A.A. FIELD: "New plastic piping sets trend in
hydronic systems" pages 65—69.

(73) Proprietor: Neate, Kenneth Henry
461 Bushey Mill Lane
Bushey, Hertfordshire (GB)

(72) Inventor: Neate, Kenneth Henry
461 Bushey Mill Lane
Bushey, Hertfordshire (GB)

(74) Representative: Thomson, Roger Bruce et al,
POLLAK MERCER & TENCH High Holborn House
52/54 High Holborn
London, WC1V 6RY (GB)

Courier Press, Leamington Spa, England.

Modules for underfloor heating and/or cooling systems and system
comprising such modules

This invention relates to heating and/or cooling modules for use in underfloor heating and/or cooling systems, for example in homes, schools, offices, hospitals, etc.

One known form of underfloor central heating system comprises an electric heating cable, consisting of an electric heating wire sheathed in a plastics tube, which is embedded in a screed of concrete forming a floor of a building.

Another form of underfloor central heating system comprises a tube, made either of metal or a plastics material, which is embedded in a concrete screed as the floor is built and through which heated water is passed.

In both these known systems, the concrete screed in which the heating cable or heated water tube is embedded forms a large storage-type heating system.

However, these known systems suffer from a major disadvantage, particularly in the installation thereof, in that the heating cable or heated water tube is laid on a sub-floor from a reel or coil during installation, thus resulting in high labour costs, and requiring considerable care and skill on the part of the persons installing the system. The concrete screed is subsequently poured over the sub-floor. In other systems there is usually a need for anchor points embedded in the sub-floor, thus weakening the effectiveness of the damp-proof membrane at these points. Long runs of such piping also tend to give off heat, metre by metre of length, thus causing inequalities in flow temperature with diminishing temperatures towards the end of the run.

Other systems are known, based upon the use of sinuous pipes, but primarily for installation in walls, where the problems and requirements are different from those of an underfloor system. One such example is described in British patent specification No. 536390.

Another example of a heating system for wall installation is described in French Patent Specification Publication No. 2137335. In this system a number of small panel units are mounted close together, for example around a window, and comprise metal piping, for example steel piping, carrying a heating liquid and carried on a metal frame which is then embedded in the plaster.

It is an object of the present invention to provide a modular system for an underfloor heating/cooling system which can be completely prefabricated, which is portable, and which can easily be transported to the site for installation.

It is another object of the present invention to provide a module which by virtue of its construction is extremely easy to handle and to manoeuvre in restricted access conditions.

It is a further object to provide a module which overcomes the problem of air-locks which, particularly in an underfloor system with long runs of substantially horizontal pipe, can be especially troublesome with known systems which use relatively large bore pipes.

It is yet another object of the invention to provide a modular system which enables one substantially to equalise the flow temperature of the water to ensure an even dispersal of floor temperature.

It is a further object of the invention to provide a module which accommodates thermal expansion and contraction of tubing in use.

In accordance with the present invention, there is provided a heating and/or cooling module for use in an underfloor heating and/or cooling system, the module comprising conduit means formed as a continuous length of tubing arranged in a serpentine configuration for the passage of a heating or cooling liquid therethrough, and thermally conductive support means for the conduit means both to support the conduit means and to dissipate heat therefrom, the conduit means and the support means together forming a portable unit, characterised in that the conduit means and support means are prefabricated as a portable unit adapted to be laid as a unit on a flooring surface, the conduit means is a continuous length of plastics tubing with an internal bore which is sufficiently small to prevent air from becoming trapped within the tubing during the passage of the liquid therethrough, and the support means and the tubing are flexible to enable the complete unit to fold about an axis parallel to the longitudinal axis of the tubing.

Preferably, the tubing has an internal bore within the range of 5 mm to 9 mm diameter.

In a preferred embodiment, the module includes means to accommodate expansion and contraction of the tubing, characterised in that said means comprises a flexible envelope within which the tubing and the support means are encapsulated.

The envelope may be a wire-reinforced sheet of plastics material.

In a preferred embodiment the envelope is such that when the module is buried by the flooring material the envelope is pressed into intimate contact with the tubing around a major sector of the tube circumference and pockets of air are trapped in the region of the minor sector of the tube circumference.

Also in accordance with the invention there is provided a heating and/or cooling system comprising a plurality of such modules buried in an underfloor system, characterised in that the modules are connected to flow and return pipes as a set in parallel or as a number of sub-sets with the modules in parallel in each sub-set.

Although the heating and/or cooling module of the invention is primarily designed to be embedded in a concrete floor screed, it may also be embedded in a wall or ceiling of a building, depending upon the particular application to which the heating and/or cooling system is to be put. Of course, it will be appreciated that the modules may also be installed in an outdoor environment, such as beneath a games pitch, where they can be used to prevent frost forming or to prevent snow settling on the pitch during adverse weather conditions, particularly during the winter months.

It will also be appreciated that the modules may be installed as part of an air conditioning (cooling) system in a building, in which case cold water is passed through the tubing.

The module and the modular system based upon it is particularly advantageous in reducing installation costs substantially as compared with conventional systems. Any number of such modules may be used to provide a required temperature within a room of a building. The modular system is also particularly attractive to architects, surveyors and others in the building trade because one can rapidly calculate the number of modules needed for any particular site, based upon the fact that the modules are standardised, and can consequently quote a reliable price for the installation.

In order that the invention may be fully understood, various preferred embodiments thereof will now be described by way of example and with reference to the accompanying drawings, in which:

Fig. 1 is a partial plan view of a portable heating module in accordance with the invention for installation in an underfloor central heating system;

Fig. 2 is an enlarged cross-sectional view of a portion of the module shown in Fig. 1;

Fig. 3 is a view of the portion of the module shown in Fig. 2 but embedded in a concrete floor screed; and

Figs. 4 and 5 are schematic plan views of two domestic central heating installations incorporating such modules.

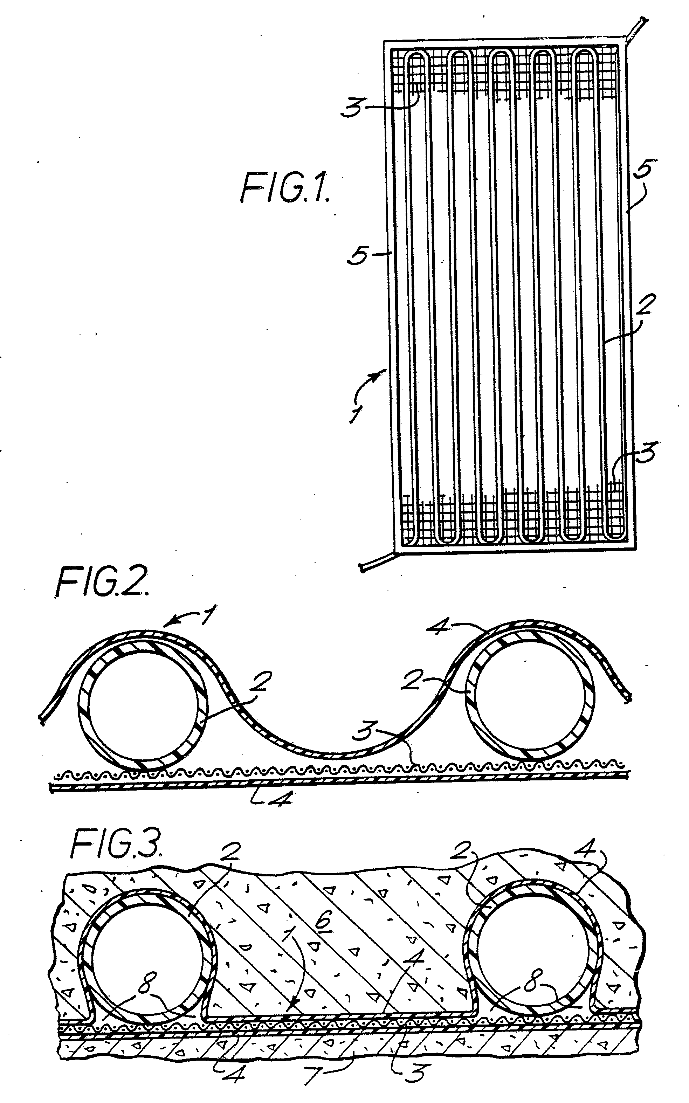

Referring to Figs. 1 and 2 of the drawings, the portable prefabricated module 1 for installation in an underfloor central heating system comprises a continuous length of plastics tube 2 supported and secured to a rectangular, metal wire mesh 3 in a serpentine configuration. The tubing 2 has a relatively low heat emission and reliance is placed upon the heat conducting properties of the mesh 3 for dissipation of heat to the floor. By using tubing which is in one continuous length in each module one avoids any problem of leakage at joints, which can occur in systems which are fabricated on site.

An important feature of the present invention is that the tubing 2 is of small bore. Tubing with an internal diameter of about 7 mm is preferred although tubing within the range of 5 to 9 mm internal diameter is satisfactory. When installing a conventional underfloor system with large runs of substantially horizontal pipework air can become trapped in the pipes where there is an upward convexity. This air can be extremely difficult to remove. However, with small bore tubing this problem has been found not to occur and the tubing is effectively self-venting. Any air bubbles will travel along the tube to a suitable venting point. This is thought to be due to a combination of the fact that the surface tension of water in a pipe of this diameter does not allow a bubble to cling to the tube wall and the fact that the water is travelling through the pipe at a relatively high speed, for example of the order of 6 metres per second.

The use of the wire mesh 3 as a support backing, coupled with the use of flexible tubing, gives the prefabricated module a degree of flexibility which conventional systems lack. Thus, the complete unit can be folded about an axis running parallel to the length dimension of the tubing, or can even be rolled up. This makes the module very easy to handle, especially where access is restricted. Also it means that the module can be installed on an uneven surface or on top of some fixed obstruction, because this flexibility will enable the module to adapt itself to any such irregularity.

A flexible plastics envelope 4 encases the tube 2 and wire mesh 3 and is sealed around the perimeter of the mesh by a length of self-adhesive tape 5 which is preferably thermally reflective. The envelope 4 is preferably a wire-reinforced sheet of plastics material, such as polyethylene. The envelope 4 loosely encapsulates the tube 2 and mesh 3 so that it can move with respect to the tube and mesh when the module 1 is embedded in a concrete floor screed. From diagonally-opposed corners of the mesh 3 respective ends of the tube 2 project through the tape 5, one end constituting a water input and the other end a water output. The heated water input end of the tube 2 is connected to a heated water source and the water output end of the tube is connected to the water source for recirculation. Because of the small bore tubing 2 the volume of water in the system is relatively small, which means that one achieves a quick response to a demand and also economical operation. The relatively close pitch spacing of the tube limbs in each module means also that the module can be operated in a heating system at low water temperatures, for example down to 38°C.

Fig. 3 shows the module 1 embedded in a concrete floor screed 6, the weight of the poured concrete having moved the envelope 4 downwardly into intimate contact with the mesh 3 and with the major portion of the circumferential surface of the tubing 2. The portion of the envelope 4 beneath the mesh 3 is, of course, sandwiched between the mesh and a supporting sub-floor 7 upon which the module 1 has been laid. However, elongate pockets 8, defined by a minor portion of the circumferential surface of the tubing 2 and corresponding portions of the mesh 3 and envelope 4 extend along the sides of the tubing to allow for expansion and contraction of the tubing during operation of the module in the installed system.

Generally, the sub-floor 7 upon which the module 1 is laid before being embedded in concrete is 3.8 to 5 cm below normal floor level for housing and office and deeper for industrial buildings, the module being connected to a distribution valve with pipework leading back to a boiler. Alternatively, the heating system may incorporate a solar heating panel, in which case the solar-heated water may be used to augment the heated water from the boiler.

Thus, it can be seen that the present invention provides a prefabricated, portable heating and/or cooling module which is easy to install and which, when installed, is unobtrusive and provides a substantial reduction in fuel costs when compared with the costs associated with known systems. In some instances, it has been estimated that intallation costs could be reduced by as much as 49% in comparison with known underfloor systems.

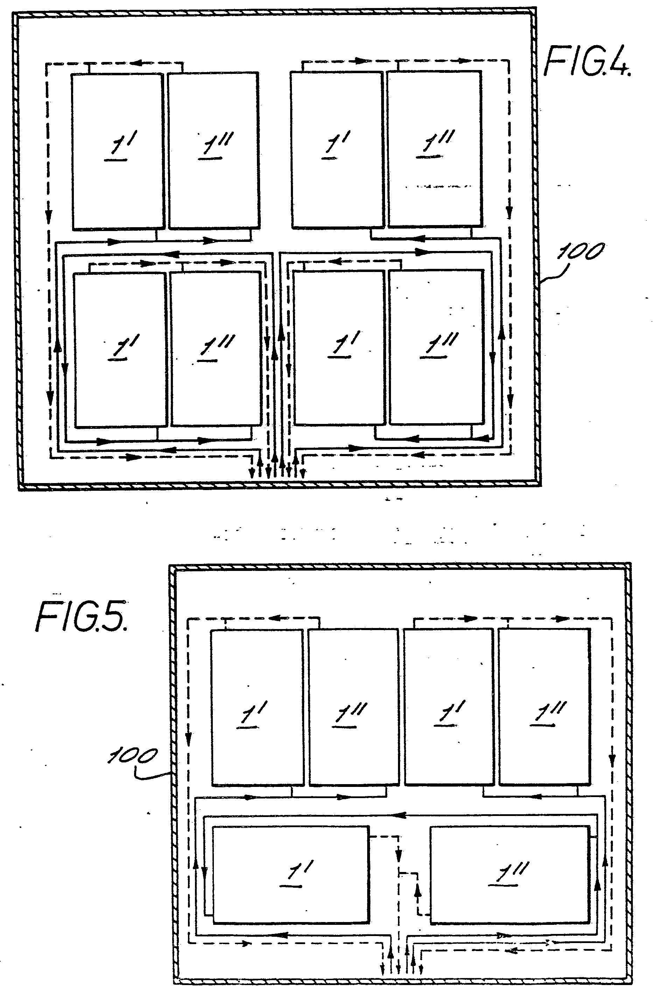

Fig. 4 shows, diagrammatically, the ground floor plan of a medium size house with a modular underfloor heating system installed. The system comprises four pairs 1', 1" of heating modules embedded in a concrete floor screed (not shown). Respective heated water input pipes (solid lines) and water return pipes (broken lines) are connected to each module 1', 1". The modules of each pair are connected in parallel and the direction of water flow in each pipe is indicated by the arrows.

The connection of the modules of each pair in parallel is advantageous because one thereby achieves better temperature equalisation among the several modules, as compared with a series-connected system where there is a large temperature drop across the system. One either connects all the modules as a set in parallel, or, as shown in Fig. 4, connects up the modules as a number of sub-sets with the modules in parallel in each sub-set.

Similarly, Fig. 5 shows, diagrammatically, the ground floor plan of a small size house, there being only three pairs of panels to provide the necessary heat output. Again, respective heated water input pipes and water return pipes are shown, with the direction of water flow in each pipe being indicated by the arrows.

In both cases the outer cavity wall 100 of the house may be thermally insulated to reduce operating costs and conserve energy.

## Claims

1. A heating and/or cooling module for use in an underfloor heating and/or cooling system, the module comprising conduit means formed as a continuous length of tubing arranged in a serpentine configuration for the passage of a heating or cooling liquid therethrough, and thermally conductive support means for the conduit means both to support the conduit means and to dissipate heat therefrom, the conduit means and the support means together forming a portable unit, characterised in that the conduit means and support means are prefabricated as a portable unit adapted to be laid as a unit on a flooring surface, the conduit means is a continuous length of plastics tubing with an internal bore which is sufficiently small to prevent air from becoming trapped within the tubing during the passage of the liquid therethrough, and the support means and the tubing are flexible to enable the complete unit to fold about an axis parallel to the longitudinal axis of the tubing.

2. A module as claimed in claim 1, characterised in that the tubing has an internal bore within the range of 5 mm to 9 mm diameter.

3. A module as claimed in claim 1 or 2, including means to accommodate expansion and contraction of the tubing, characterised in that said means comprises a flexible envelope within which the tubing and the support means are encapsulated.

4. A module as claimed in claim 3, characterised in that the envelope comprises a wire-reinforced sheet of plastics material.

5. A module as claimed in claim 3 or 4, characterised in that the envelope is such that when the module is buried by the flooring material the envelope is pressed into intimate contact with the tubing around a major sector of the tube circumference and pockets of air are trapped in the region of the minor sector of the tube circumference.

6. A module as claimed in any preceding claim, characterised in that the support means comprises a metal wire mesh on to which the tubing is secured in intimate contact therewith.

7. A heating and/or cooling system comprising a plurality of modules as claimed in any preceding claim buried in an underfloor system, characterised in that the modules are connected to flow and return pipes as a set in parallel or as a number of sub-sets with the modules in parallel in each sub-set.

8. A system as claimed in claim 7, characterised in that there are two modules in each sub-set.

## Patentansprüche

1. Heiz- und/oder Kühlmodul für ein Unterflurheiz- und/oder -kühlsystem, mit einer aus einer ununterbrochenen Rohrlänge gebildeten und serpentinenförmig angeordneten Rohrleitung zum Durchtritt einer Heiz- oder Kühlflüssigkeit, und mit einer wärmeleitenden Halterung zum Unterstützen der Rohrleitung und zum Verteilen von von dieser herrührender Wärme, wobei die Rohrleitung und die Halterung zusammen eine transportfähige Einheit bilden, dadurch gekennzeichnet, daß die Rohrleitung und die Halterung als transportfähige Einheit vorgefertigt sind, daß die Rohrleitung eine ununterbrochene Länge aus Kunststoffrohr mit einer Bohrung ist, die zum Verhindern des Einschließens von Luft in der Rohrleitung beim Durchtritt der Flüssigkeit genügend klein ist und daß die Rohrleitung und die Halterung zum Zusammenlegen der vollständigen Einheit um eine zu der Längsachse der Rohrleitung parallele Achse flexibel sind.

2. Modul nach Anspruch 1, dadurch gekennzeichnet, daß die Rohrleitung eine Innenbohrung mit 5 bis 9 mm Durchmesser hat.

3. Modul nach Anspruch 1 oder 2, mit Ausgleichsmitteln für Rohrexpansionen und -kontraktionen, dadurch gekennzeichnet, daß die Ausgleichsmittel eine flexible, die Rohrleitung und die Halterung einschließende Umhüllung aufweisen.

4. Modul nach Anspruch 3, dadurch gekennzeichnet, daß die Umhüllung eine Schicht drahtverstärkten Kunststoffs aufweist.

5. Modul nach Anspruch 3 oder 4, dadurch gekennzeichnet, daß die Umhüllung beim Einbetten mit Einbettungsmaterial auf dem größeren Sektor des Rohrumfangs in innigen Kontakt mit der Rohrleitung gedrückt wird und im Bereich des kleineren Sektors des Rohrumfangs Lufttaschen einschließt.

6. Modul nach einem der vorstehenden Ansprüche 1 bis 5, dadurch gekennzeichnet, daß die Halterung ein Metalldrahtgitter aufweist, auf dem die Rohrleitung mit innigem Kontakt befestigt ist.

7. Heiz- und/oder Kühlsystem, mit einer Mehrzahl von nach einem der vorstehenden Ansprüche ausgebildeten, in ein Unterflursystem eingebetteten Modulen, dadurch gekennzeichnet, daß die Module als eine Gruppe parallel oder als eine Anzahl von Untergruppen mit in jeder Untergruppe parallelen Modulen an Speiseund Rückleitungen angeschlossen sind.

8. System nach Anspruch 7, dadurch gekennzeichnet, daß jede Untergruppe zwei Module hat.

**Revendications**

1. Module de chauffage et/ou de refroidissement destiné à être utilisé dans un système de chauffage et/ou de refroidissement sous plancher, ce module comprenant des dispositifs de canalisation réalisés sous forme d'une longueur continue de tuyau disposée en serpentin pour le passage d'un liquide de chauffage ou de refroidissement à travers elle, et des organes de support thermoconducteurs pour les dispositifs de canalisation, servant à la fois à les soutenir et à dissiper la chaleur à partir de ceux-ci, les dispositifs de canalisation et les organes de support formant en combinaison un ensemble portatif, caractérisé en ce que les dispositifs de canalisation et les organes de support sont préfabriqués sous forme d'élément portatif qui est conçu pour être étendu en un ensemble sur une surface de plancher, en ce que les dispositifs de canalisation sont constitués par une longueur continue de tuyau de matière plastique dont le calibre intérieur est suffisamment petit pour empêcher que de l'air soit emprisonné dans le tuyau au cours du passage du liquide à travers celui-ci, et en ce que les organes de support et le tuyau sont flexibles, de telle manière que l'élément complet puisse être plié autour d'un axe parallèle à l'axe longitudinal du tuyau.

2. Module selon la revendication 1, caractérisé en ce que le tuyau a un calibre intérieur dont le diamètre se situe dans la gamme de 5 mm à 9 mm.

3. Module selon la revendication 1 ou 2, comprenant des moyens pour absorber la dilatation et la contraction du tuyau, caractérisé en ce que ces moyens comprennent une enveloppe flexible dans laquelle le tuyau et les organes de support sont encapsulés.

4. Module selon la revendication 3, caractérisé en ce que l'enveloppe est faite d'une feuille de matière plastique renforcée de fils métalliques.

5. Module selon la revendication 3 ou 4, caractérisé en ce que l'enveloppe est conçue de telle manière que quand le module est noyé dans le matériau du plancher, l'enveloppe soit pressée en contact intime avec le tuyau le long d'un secteur majeur de la circonférence du tube et que des poches d'air soient emprisonnées dans le région du secteur mineur de la circonférence du tube.

6. Module selon l'une quelconque des revendications 1 à 5, caractérisé en ce que les organes de support sont constitués par un treillis de fils métalliques sur lequel le tuyau est fixé en contact intime avec lui.

7. Système de chauffage et/ou de refroidissement comprenant une multiplicité de modules selon l'une quelconque des revendications 1 à 6 noyés dans une structure sous plancher, caractérisé en ce que les modules sont raccordés à des conduites montantes et de retour à la manière d'une batterie en parallèle ou sous forme d'un certain nombre de sous-groupes, les modules étant disposés en parallèle dans chaque sous-groupe.

8. Système selon la revendication 7, caractérisé en ce qu'il y a deux modules dans chaque sous-groupe.

0.006.683

FIG.1.

FIG.2.

FIG.3.

FIG.4.

FIG.5.